# EUROPEAN PATENT SPECIFICATION

(11) **EP 3 791 541 B1**
(45) Date of publication and mention of the grant of the patent: **31.08.2022**
(21) Application number: 19732620.0
(22) Date of filing: 19.06.2019
(51) Int. Cl.: H04L 65/102, H04L 12/66

(54) **CLOUD GATEWAY DEVICE AND METHOD FOR OPERATING A CLOUD GATEWAY DEVICE**
CLOUD-GATEWAY-VORRICHTUNG UND VERFAHREN ZUM BETREIBEN EINER CLOUD-GATEWAY-VORRICHTUNG
DISPOSITIF DE PASSERELLE CLOUD ET PROCÉDÉ POUR FAIRE FONCTIONNER UN DISPOSITIF DE PASSERELLE CLOUD

(30) Priority: 20.06.2018 EP 18178824
(43) Date of publication of application: 17.03.2021
(73) Proprietor: Siemens Aktiengesellschaft, 80333 München (DE)
(72) Inventor: VERMA, Amit, 82024 Taufkirchen (DE)
(74) Representative: Isarpatent
(86) International application number: PCT/EP2019/066272
(87) International publication number: WO 2019/243454

(56) References cited:
- US-A1- 2016 147 506
- LUKÃ Å HELLEBRANDT ET AL: "Survey of Privacy Enabling Strategies in IoT Networks", COMPUTER SCIENCE AND ARTIFICIAL INTELLIGENCE, ACM, 2 PENN PLAZA, SUITE 701NEW YORKNY10121-0701USA, 5 December 2017 (2017-12-05), pages 216-221, XP058387097, DOI: 10.1145/3168390.3168440 ISBN: 978-1-4503-5392-2

## Description

### FIELD OF THE INVENTION

The present disclosure is concerned with the area of cloud platforms for the Industrial Internet of Things (IIoT) and the invention in particular relates to a cloud gateway device functioning as an interface between a cloud platform and IIoT devices in an industrial plantand a method for operating such a cloud gateway device.

### BACKGROUND OF THE INVENTION

Industrial automation systems, machines, field devices, sensors etc. - collectively termed as automation devices in the below - are connected to a cloud platform either directly or via cloud gateway devices. Automation devices connected to the cloud platform are termed as IIoT devices in the below.

Cloud gateway devices are known per se. A cloud gateway device is normally installed in a manufacturing unit. It collects data from IIoT devices, optionally preprocesses analyses and/or encrypts the data, and forwards the data further to the cloud platform in the cloud. The cloud gateway device thus acts as an interface between the IIoT devices and the cloud platform. It may also facilitate a closed loop control between the cloud and the IIoT devices.

Cloud gateway devices - sometimes termed in short as cloud gateway or gateway in the below - are not unheard of as being perceived by its user/users as a "black box" (3^{rd} party's black box) in their network. Users, e.g. companies, plant operators, engineers etc., require transparency about operations performed by the cloud gateway device and transparency about the data transferred by the cloud gateway device. To this end, users want transparency about the cloud gateway's operations and wish for audit capabilities on the cloud gateway, wherein said audit capabilities should show what data is being collected by the cloud gateway and sent to the cloud, which IIoT devices the cloud gateway is communicating with and so on. Gateway management apps in the cloud basically provide this transparency already. However, users sometimes wish to scan all outgoing traffic, use their own data anonymizers and enforce their IT and data handling policies on the outgoing data.

Therefore, there is a general need for a cloud gateway device with increased functionality offering the required level of transparency.

US 2016/147506 A1 relates to a network system in which IOT devices are connected to the Internet through a gateway formed by an IOT hub. The IOT hub contains a memory with a program code for executing by a hardware logic. It is also described that IOT devices, such as an environmental sensor may provide an IOT clock hub with a current temperature, pressure and humidity. However, the hub, despite carrying out a program, does not compute but only receives data.

Therefore, the object of the present invention is to provide a cloud gateway device, a method for operating such a cloud gateway device, a computer program product and a cloud computing environment with enhanced functionalities such that the cloud does not appear as a black box to users.

This object is solved by a cloud gateway device according to claim 1. Furthermore, this object is also solved by a method according to claim 3 and a computer program product according to claim 6. Furthermore, the object is also solved by a computer program product according to claim 7. The object is also solved by a cloud computing environment according to claim 8 which uses a cloud gateway device according to the independent claim 1. Further advantageous embodiments and improvements of the invention are listed in the dependent claims. Hereinafter, before coming to a detailed description of the embodiments of the invention with reference to the attached drawings, some particular features of the present invention are highlighted which contribute to the understanding of the claimed invention.

### SUMMARY OF THE INVENTION

The present invention involves transparency features implemented in the cloud gateway device itself. Such "onboard" transparency features allow complete visibility and control of the relevant user's data leaving the user's plant, IT network or - more generally speaking - the user's organization via the cloud gateway device.

More specifically, the cloud gateway device according to the invention is on the one hand adapted for being communicatively connected to one or more IIoT devices to at least collect data therefrom and is on the other hand also adapted for being communicatively connected to a cloud platform to send collected data into the cloud platform. The said transparency features are implemented in the cloud gateway device itself, by means of a transparency module. The said transparency module is implemented in software and as thus stored in an internal memory of the cloud gateway device to be executed through processing means, e.g. microprocessor means, comprised by the cloud gateway device. The transparency module is adapted for computing information (transparency information) pertaining to industrial data acquired from the IIoT devices and/or the cloud gateway device, wherein the said industrial data is e.g. inbound traffic data from an IIoT device to the cloud gateway device, outbound traffic data from the cloud gateway device to an IIoT device and/or configuration data residing on the IIoT devices. The computation of the said transparency information is the pivotal transparency feature provided by the transparency module and thus the transparency feature provided by the cloud gateway device. The transparency information can be displayed for being scrutinized by a user and/or can be transferred to another device for being checked there.

The present invention also involves a method for operating a cloud gateway device providing transparency features implemented in the cloud gateway device itself.

The present invention more specifically provides a method for operating a cloud gateway device as defined here and in the below, wherein the method comprises the steps of acquiring industrial data as defined above from the IIoT devices and/or the cloud gateway device and computing information (transparency information) pertaining to the said industrial data.

Transparency information resulting from the acquired industrial data (and optionally the acquired industrial data) is stored and displayed on an onboard display unit, and made available for being sent to an external device or system, such as a user premises IT system, or for being retrieved by such external device or system.

Further features and advantages of the present invention will become apparent from the drawings and detailed description of the following preferred embodiments.

### BRIEF DESCRIPTION OF THE DRAWINGS

The above-mentioned and other concepts of the present invention will now be addressed with reference to the drawings of the preferred embodiments of the present invention. The shown embodiments are intended to illustrate, but not to limit the invention. The drawings contain the following figures, in which like numbers refer to like parts throughout the description and drawings and wherein:
- FIG 1: shows a schematic diagram of an IIoT system comprising onsite IIoT devices and services available in the cloud as well as a cloud gateway device functioning as an interface between said IIoT devices and said cloud services,
- FIG 2: shows a cloud gateway device and
- FIG 3: shows a simplified flowchart of the method steps performed by the cloud gateway device.

### DETAILED DESCRIPTION OF THE PREFERRED EMBODIMENT

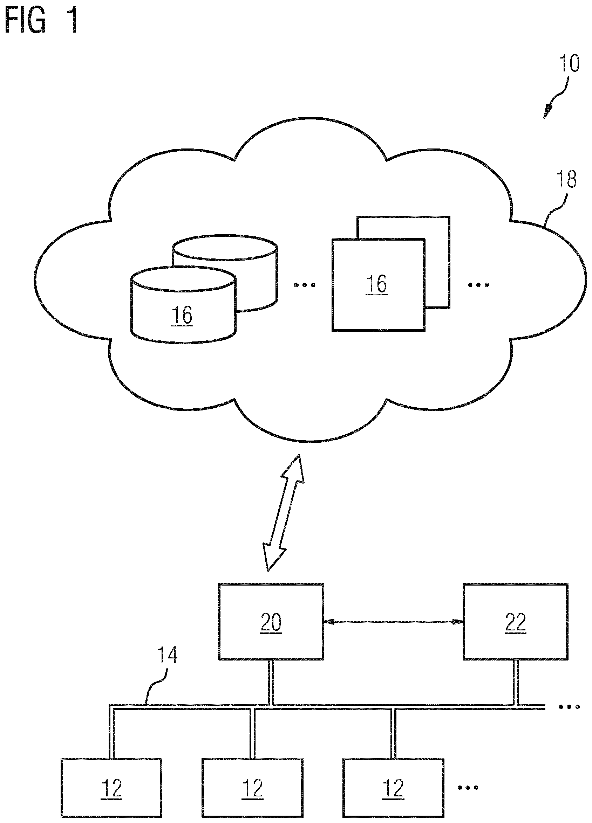

FIG 1 shows a schematic diagram of an IIoT system 10 comprising onsite IIoT devices 12 (often termed "assets" in professional terminology) interconnected via a network 14 and services 16 (cloud services) available in a cloud platform 18 as well as a cloud gateway device 20. The said gateway device 20 is connected to the said network 14 on the one hand and functions as an interface between said IIoT devices 12 and said cloud services 16 on the other hand.

As is known in the art per se, some IIoT devices 12 can be part of a technical process, e.g. an industrial production process, i.e. an IIoT device 12 can be an actor or a sensor installed in the relevant process, and some IIoT devices 12 can be part of an automation system provided for controlling and/or supervising the process, i.e. an IIoT device 12 can be a PLC device, a SCADA device or an HMI device. Generally speaking, the subject IIoT devices 12 are IIoT devices 12 in an industrial plant.

As is also known in the art per se, services 16 available in the cloud (cloud services) include e.g. data storage services, data processing services, data analytics services etc.

FIG 1 also shows - in simplified and schematic form - a user premises IT system 22 which is optionally communicatively connected to the network 14 and which is provided for interfacing with the cloud gateway device 20 when accessing transparency features implemented in the cloud gateway device 20, as explained in more detail below.

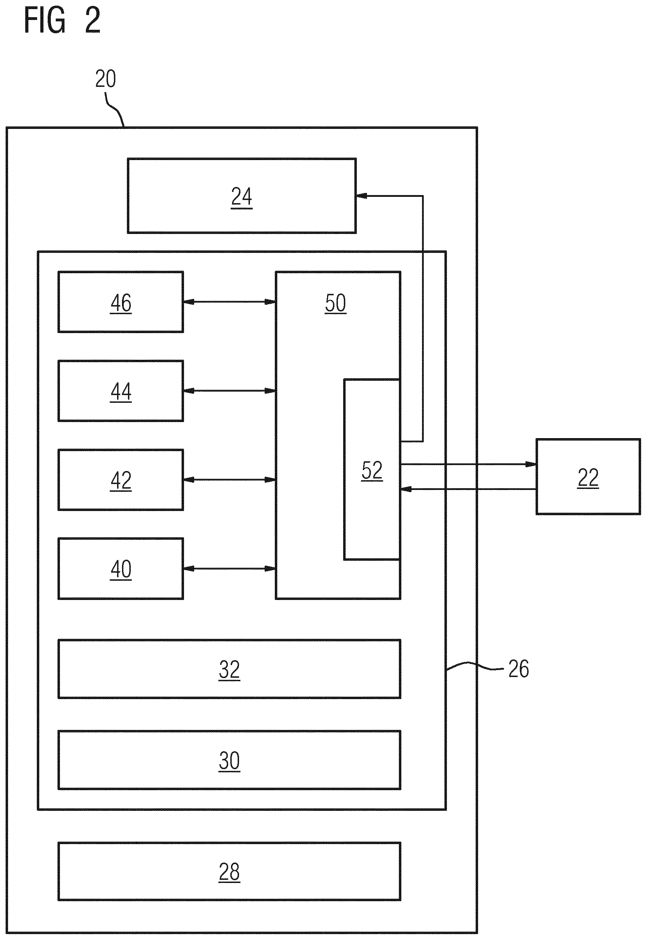

FIG 2 shows - again in simplified and schematic form - an exemplary embodiment of a cloud gateway device 20 ("gateway") as proposed herein with more details. The cloud gateway device 20 can be a pure software application or can alternatively be - as shown - a physical device, comprising software functionality, of course, with an onboard display unit 24. A physical device functioning as a cloud gateway device 20 comprises an internal memory 26 and a processing means 28, e.g. a microprocessor.

A software stack of the cloud gateway device 20 comprises an embedded operating system 30 and so-called middleware 32, wherein the said middleware is provided for functions such as containerization, virtualization and/or software module management.

A data-acquisition module 40 implements the device drivers for collecting data from an IIoT device 12 (FIG 1) or IIoT devices 12 and for managing an IIoT device 12 or IIoT devices 12 connected to the cloud gateway device 20. The data collected by the data-acquisition module 40 is termed industrial data hereinafter and is at least one of inbound traffic data from an IIoT device 12 to the cloud gateway device 20, outbound traffic data from the cloud gateway device 20 to an IIoT device 12 and configuration data residing on the IIoT devices 12.

An onboard analytics module 42 is provided for pre-processing industrial data collected by the data-acquisition module 40 and for running onboard analytics algorithms and apps.

An optional device management module 44 is provided for deploying and managing a configuration (data acquisition settings, firmware upgrade etc.) of the cloud gateway device 20.

An optional connectivity module 46 is provided for managing network interfaces to the cloud 18 (FIG 1) and to the IIoT devices 12 (FIG 1) connected to the cloud gateway device 20. The aforementioned modules, i.e. the data-acquisition module 40, the analytics module 42, the management module 44 and the connectivity module 46, as well as their relevant functionalities are known per se and are therefore not described here in more detail.

In the exemplary embodiment shown in FIG 2 the audit and transparency feature proposed here is implemented in the form of a transparency module 50 and the said transparency module 50 is part of the software stack of the cloud gateway device 20. The transparency module 50 is thus stored in the internal memory 26 of the cloud gateway device 20 and is executed by the processing means 28 of the cloud gateway device 20 during operation of the cloud gateway device 20.

The transparency module 50 is adapted for computing information (transparency information) pertaining to the said industrial data, acquired from the IIoT devices 12 and/or the cloud gateway device 20 with the help of defined interfaces (e.g. REST interface, MODBUS interface) and on an on demand basis. To this end, the transparency module 50 is adapted for computing transparency information based on at least one of the following by interfacing internally with at least one of the other modules 40-46 comprised by the cloud gateway device 20:
1. Data traffic, namely inbound data traffic (from IIoT devices 12 to the gateway 20) and/or outbound data traffic (from the gateway 20 to the cloud 18).
2. Configuration data pertaining to the data acquisition, for example one or more of the following:
   - time series variables collected along with their corresponding sampling frequency;
   - data buffers (e.g. diagnostic buffers from PLCs) from the IIoT devices 12 being collected;
   - number of IIoT devices 12 connected to the gateway 20 along with their IP addresses;
   - write operations by the gateway 20 destined for at least one of the IIoT devices 12 connected to the gateway 20;
   - anonymization status, i.e. data pertaining to whether anonymization is being performed on the data by the gateway 20;
   - details of onboard analytics being performed on the data.

The said transparency information is displayed on an onboard display unit 24 of the cloud gateway device 20. Additionally and/or alternatively the information is made available externally by being transferred via an interface 52 of the cloud gateway device 20, e.g. an API or a REST API or a plurality of APIs or REST APIs, to e.g. an external system.

To this end, the arrow originating at the interface 52 and pointing outwards of the cloud gateway device 20 is meant to symbolize such information made available to e.g. an external system such as a user premises IT system 22 (FIG 1, FIG 2).

The arrow originating at the interface 52 and pointing towards the onboard display unit 24 is meant to symbolize information being displayed through the said onboard display unit 24.

The following is a non-exhaustive list of features implemented by the transparency module 50 for supporting e.g. IT policies of a user of the cloud gateway device 20:
1. The transparency module 50 allows for starting and stopping the industrial data acquisition locally on the cloud gateway device 20. Relevant actions are initiated automatically by the transparency module 50 upon receipt of respective data acquisition start or data acquisition stop commands (e.g. PUT iotgateway/audit/stop-all-data-transfer, PUT iotgateway/audit/resume-all-data-transfer).
2. The transparency module 50 allows for obtaining a parallel stream of all the data collected by the cloud gateway device 20 and/or all the data transferred to the cloud platform 18 by the cloud gateway device 20. Relevant actions are initiated automatically by the transparency module 50 upon receipt of respective data acquisition commands (e.g GET iotgateway/audit/inbound-data-stream, GET iotgateway/audit/outbound-data-stream).
3. The transparency module 50 allows for inspecting all control signals used by the cloud gateway device 20 and/or allows for inspecting all write operations of the cloud gateway device 20 on the IIoT devices 12, the latter optionally before they are performed by the cloud gateway device 20. Again, relevant actions are initiated automatically by the transparency module 50 upon receipt of respective data acquisition commands (e.g GET iotgateway/audit/all-control-operations, GET iotgateway/audit/all-write-operations).
4. The transparency module 50 allows for plugging in custom anonymization modules by the user, so that the data collected and/or processed by the cloud gateway device 20 can be anonymized as per the user's requirements and IT policies. A relevant module is installed on the cloud gateway device 20 and integrated into the cloud gateway's 20 software stack upon receipt of a respective deployment command (e.g. PUT iotgateway/audit/deploy-custom-anonymizer).

One or more of the above features can be made available as APIs on the cloud gateway device 20 within the transparency module's 50 interface 52. The transparency module 50 comprises processing functionality provided for interpreting and executing one or more of the aforementioned commands, receivable from e.g. a user premises IT system 22. The data identified in an acquisition command or a plurality of acquisition commands and being made available through the transparency module 50 is displayed by means of the onboard display unit 24 and/or being transferred to the original requester, e.g. the premises IT system 22 or a dedicated device therein, to be displayed and/or processed there as appropriate.

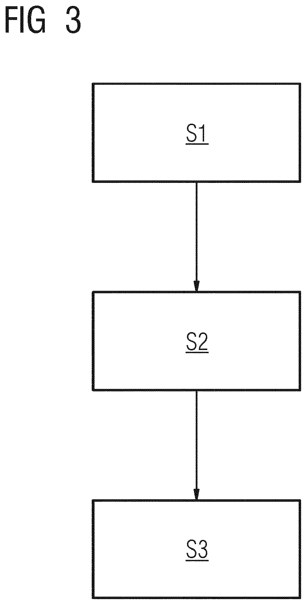

FIG 3 is a simplified flowchart, showing the steps performed by the cloud gateway device 20 when operating according to the subject invention. A first step S1 represents the step of acquiring the industrial data from the IIoT devices 12 and/or the cloud gateway device 20. A second step S2 represents the step of computing information pertaining to the industrial data. A third step S3 represents the step of displaying the computed information pertaining to the industrial data on the onboard display unit 24 of the cloud gateway device 20.

The present invention provides the following advantages to the supplier and system integrator: Data processed by the cloud gateway device 20 and/or sent by the cloud gateway device 20 to the cloud 18 becomes fully accessible for the cloud gateway's user without having to make use of 3^{rd} party apps available in the cloud 18. The user now has the ability to better check if sensitive data is processed correctly and/or can apply additional steps for processing, e.g. encrypting the data, as seen fit.

In addition to the embodiments of the present invention described above, those of skill in the art will be able to arrive at a variety of other arrangements and steps which, if not explicitly described in this document, nevertheless embody the principles of the invention and fall within the scope of the appended claims.

Briefly summarizing the above descriptions, this disclosure proposes a cloud gateway device 20 and a method for operating the same, wherein the cloud gateway device 20 is conventionally communicatively connected to one or more IIoT devices 12 to at least collect data therefrom and to the cloud 18 for sending collected data into the cloud 18, wherein the cloud gateway device 20 comprises a transparency module 50 provided for implementing transparency features into the cloud gateway device 20, and wherein operating the said cloud gateway device 20 comprises acquiring industrial data from the IIoT devices 12 and/or the cloud gateway device 20 and computing information (transparency information) pertaining to the said industrial data.

## Claims

1. A cloud gateway device (20)
a) adapted for being communicatively connected to one or more IIoT devices (12) to at least acquire industrial data therefrom and
b) adapted for being communicatively connected to a cloud platform (18) to send the collected industrial data to the cloud platform (18),
wherein the cloud gateway device (20) comprises:
c1) a processing means (28),
c2) a memory (26) coupled to the processing means (28), c3) a transparency module (50) and
c4) an on-board display unit (24),
c5) wherein the said transparency module (50) is stored in the said memory (26) in the form of machine-readable instructions and is executable by said processing means (28), c6) wherein the said transparency module (50) is adapted for computing transparency information pertaining to the industrial data acquired from the IIoT devices (12) and/or the cloud gateway device (20),
c7) wherein the transparency module (50) is adapted for computing the transparency information, by interfacing internally with an onboard analytics module (42) and a data-acquisition module (40), said onboard analytics module (42) being provided for pre-processing said industrial data collected by the data-acquisition module (40), based on at least one of the following
- inbound traffic data from an IIoT device (12) to the cloud gateway device (20),
- outbound traffic data from the cloud gateway device (20) to an IIoT device (12) and/or
- configuration data residing on the IIoT devices (12), and
c8) wherein the said on-board display unit (24) is adapted for displaying the computed transparency information pertaining to the acquired industrial data;
d0) comprising an interface (52) provided for transferring the said computed transparency information pertaining to the said industrial data to an external device or system (22); wherein
d1) the transparency module (50) is adapted to obtain a parallel stream of all the data collected by the cloud gateway device (20) and all the data transferred to the cloud platform (18) by the cloud gateway device (20) upon receipt of respective data acquisition commands from the external device or system (22); wherein
d2) the transparency module (50) is adapted to inspect all control signals used by the cloud gateway device (20) and inspect all write operations of the cloud gateway device (20) on the IIoT devices (12) before they are performed by the cloud gateway device (20) upon receipt of a respective data acquisition command from the external device or system (22); wherein
d3) data identified in a data acquisition command or a plurality of data acquisition commands and being made available through the transparency module (50) is displayed by means of the onboard display unit (24).

2. The cloud gateway device (20) of claim 1,
wherein the transparency module (50) allows for plugging in custom anonymization modules by the user, so that the data collected and/or processed by the cloud gateway device (20) is anonymized as per the user's requirements and IT policies, wherein a relevant module is installed on the cloud gateway device (20) and integrated into the cloud gateway's (20) software stack upon receipt of a respective deployment command.

3. A method for operating a cloud gateway device (20) of any one of the preceding claims 1 and 2, said method comprising the steps of:
acquiring, by the cloud gateway device (20), the said industrial data from the IIoT devices (12) and/or the cloud gateway device (20);
computing, by the transparency module (50), the said transparency information pertaining to the industrial data;
displaying the computed transparency information pertaining to the industrial data on an onboard display unit (24);
transferring, by the interface (52), the said computed transparency information pertaining to the said industrial data to an external device or system (22);
obtaining, by the transparency module (50), a parallel stream of all the data collected by the cloud gateway device (20) and all the data transferred to the cloud platform (18) by the cloud gateway device (20) upon receipt of respective data acquisition commands from the external device or system (22);
inspecting, by the transparency module (50), all control signals used by the cloud gateway device (20) and inspecting all write operations of the cloud gateway device (20) on the IIoT devices (12) before they are performed by the cloud gateway device (20) upon receipt of a respective data acquisition command from the external device or system (22); and
displaying data identified in a data acquisition command or a plurality of data acquisition commands and being made available through the transparency module (50), by means of the onboard display unit (24).

4. The method of claim 3, wherein the method further comprises the step of
activating a data-acquisition module (40) residing in the said memory (26) for being executed by the said processing means (28),
wherein the said data-acquisition module (40) is adapted for acquiring the said industrial data from the IIoT devices (12) and/or the cloud gateway device (20).

5. The method of claim 3 or 4, wherein the method further comprises the step of
transferring the said computed information pertaining to the said industrial data to the external device or system (22) by means of an interface (52) comprised by the cloud gateway device (20).

6. A computer program product directly loadable into the internal memory of a cloud gateway device (20) of any one of claims 1 to 2, comprising software code portions for performing the steps of any one of claims 3 to 5, when said product is run on the cloud gateway device (20).

7. A computer program product stored on a computer usable medium, comprising computer readable program means for causing a cloud gateway device (20) of any one of claims 1 and 2 to perform a method according to any one of claims 3 to 5.

8. A cloud computing environment comprising:
a cloud platform (18) for providing one or more cloud services (16);
a cloud gateway device (20) according to any one of the claims 1 to 2; and
one or more IIoT devices (12) in an industrial plant,
wherein said cloud gateway device (20) is communicatively connected to said cloud platform (18) and
wherein the one or more IIoT devices (12) are communicatively connected to said cloud gateway device (20).

## Patentansprüche

1. Cloud-Gateway-Vorrichtung (20)
a) die dafür ausgelegt ist, kommunikationstechnisch mit einer oder mehreren IIoT-Vorrichtungen (12) verbunden zu sein, um wenigstens Industriedaten von ihr zu erfassen, und
b) die dafür ausgelegt ist, kommunikationstechnisch mit einer Cloud-Plattform (18) verbunden zu sein, um die gesammelten Industriedaten an die Cloud-Plattform (18) zu senden,
wobei die Cloud-Gateway-Vorrichtung (20) Folgendes umfasst:
cl) Verarbeitungsmittel (28),
c2) einen Speicher (26), der an die Verarbeitungsmittel (28) gekoppelt ist,
c3) ein Transparenzmodul (50) und
c4) eine Bord-Anzeigeeinheit (24),
c5) wobei das Transparenzmodul (50) in der Form maschinenlesbarer Anweisungen in dem Speicher (26) gespeichert ist und durch die Verarbeitungsmittel (28) ausführbar ist,
c6) wobei das Transparenzmodul (50) dafür ausgelegt ist, Transparenzinformationen zu berechnen, die die von den IIoT-Vorrichtungen (12) und/oder der Cloud-Gateway-Vorrichtung (20) erfassten Industriedaten betreffen,
c7) wobei das Transparenzmodul (50) dafür ausgelegt ist, durch das interne Bilden einer Schnittstelle mit einem Bord-Analysemodul (42) und einem Datenerfassungsmodul (50) die Transparenzinformationen zu berechnen, wobei das Bord-Analysemodul (42) für das Vorverarbeiten der durch das Datenerfassungsmodul (40) gesammelten Industriedaten basierend auf wenigstens einem des Folgenden bereitgestellt ist
- eingehender Verkehrsdaten von einer IIoT-Vorrichtung (12) zu der Cloud-Gateway-Vorrichtung (120),
- abgehender Verkehrsdaten von der Cloud-Gateway-Vorrichtung (20) zu einer IIoT-Vorrichtung (12) und/oder
- Konfigurationsdaten, die in den IIoT-Vorrichtungen (12) gespeichert sind, und
c8) wobei die Bord-Anzeigeeinheit (24) dafür ausgelegt ist, die berechneten Transparenzinformationen, die die erfassten Industriedaten betreffen, anzuzeigen;
d0) die eine Schnittstelle (52) umfasst, die zum Übertragen der berechneten Transparenzinformationen, die die Industriedaten betreffen, zu einer externen Vorrichtung oder einem externen System (22) bereitgestellt ist; wobei
dl) das Transparenzmodul (50) dafür ausgelegt ist, einen parallelen Strom aller durch die Cloud-Gateway-Vorrichtung (20) gesammelten Daten und aller durch die Cloud-Gateway-Vorrichtung (20) zu der Cloud-Plattform (18) übertragenen Daten beim Empfang jeweiliger Datenerfassungsbefehle von der externen Vorrichtung oder dem externen System (22) zu erhalten; wobei
d2) das Transparenzmodul (50) dafür ausgelegt ist, beim Empfang eines jeweiligen Datenerfassungsbefehls von der externen Vorrichtung oder dem externen System (22) alle durch die Cloud-Gateway-Vorrichtung (20) verwendeten Steuersignale zu prüfen und alle Schreiboperationen der Cloud-Gateway-Vorrichtung 20 in den IIoT-Vorrichtungen (12) zu prüfen, bevor sie durch die Cloud-Gateway-Vorrichtung (20) ausgeführt werden; wobei
d3) die in einem Datenerfassungsbefehl oder mehreren Datenerfassungsbefehlen identifizierten und durch das Transparenzmodul (50) verfügbar gemachten Daten mittels der Bord-Anzeigeeinheit (24) angezeigt werden.

2. Cloud-Gateway-Vorrichtung (20) nach Anspruch 1,
wobei das Transparenzmodul (50) das Anschließen kundenspezifischer Anonymisierungsmodule durch den Anwender ermöglicht, so dass die durch die Cloud-Gateway-Vorrichtung (20) gesammelten und/oder verarbeiteten Daten gemäß den Anforderungen des Anwenders und den IT-Strategien anonymisiert werden, wobei ein relevantes Modul beim Empfang eines jeweiligen Einsatzbefehls in der Cloud-Gateway-Vorrichtung (20) installiert wird und in den Software-Stapel des Cloud-Gateways (20) integriert wird.

3. Verfahren zum Betreiben einer Cloud-Gateway-Vorrichtung nach einem der vorhergehenden Ansprüche 1 und 2, wobei das Verfahren die folgenden Schritte umfasst:
Erfassen durch die Cloud-Gateway-Vorrichtung (20) der Industriedaten von den IIoT-Vorrichtungen (12) und/oder der Cloud-Gateway-Vorrichtung (20);
Berechnen durch das Transparenzmodul (50) der Transparenzinformationen, die die Industriedaten betreffen;
Anzeigen der berechneten Transparenzinformationen, die die Industriedaten betreffen, auf der Bord-Anzeigeeinheit (24);
Übertragen durch die Schnittstelle (52) der berechneten Transparenzinformationen, die die Industriedaten betreffen, zu einer externen Vorrichtung oder einem externen System (22);
Erhalten durch das Transparenzmodul (50) eines parallelen Stroms aller durch die Cloud-Gateway-Vorrichtung (20) gesammelten Daten und aller durch die Cloud-Gateway-Vorrichtung (20) zu der Cloud-Plattform (18) übertragenen Daten beim Empfang jeweiliger Datenerfassungsbefehle von der externen Vorrichtung oder dem externen System (22);
Prüfen durch das Transparenzmodul (50) beim Empfang eines jeweiligen Datenerfassungsbefehls von der externen Vorrichtung oder dem externen System (22) aller durch die Cloud-Gateway-Vorrichtung (20) verwendeten Steuersignale und Prüfen aller Schreiboperationen der Cloud-Gateway-Vorrichtung (20) in die IIoT-Vorrichtungen (12), bevor sie durch die Cloud-Gateway-Vorrichtung (20) ausgeführt werden; und
Anzeigen der in einem Datenerfassungsbefehl oder mehreren Datenerfassungsbefehlen identifizierten und durch das Transparenzmodul (50) verfügbar gemachten Daten mittels der Bord-Anzeigeeinheit (24).

4. Verfahren nach Anspruch 3, wobei das Verfahren ferner den folgenden Schritt umfasst:
Aktivieren eines Datenerfassungsmoduls (40), das in dem Speicher (26) gespeichert ist, um durch die Verarbeitungsmittel (28) ausgeführt zu werden,
wobei das Datenerfassungsmodul (40) dafür ausgelegt ist, die Industriedaten von den IIoT-Vorrichtungen (12) und/oder der Cloud-Gateway-Vorrichtung (20) zu erfassen.

5. Verfahren nach Anspruch 3 oder 4, wobei das Verfahren ferner den folgenden Schritt umfasst:
Übertragen der berechneten Informationen, die die Industriedaten betreffen, mittels einer Schnittstelle (52), die in der Cloud-Gateway-Vorrichtung (20) enthalten ist, zu der externen Vorrichtung oder dem externen System (22).

6. Computerprogrammprodukt, das direkt in den internen Speicher einer Cloud-Gateway-Vorrichtung (20) nach einem der Ansprüche 1 bis 2 ladbar ist, das Software-Codeabschnitte zum Ausführen der Schritte nach einem der Ansprüche 3 bis 5 umfasst, wobei das Produkt in der Cloud-Gateway-Vorrichtung (20) ausgeführt wird.

7. Computerprogrammprodukt, das in einem computerverwendbaren Medium gespeichert ist, das computerlesbare Programmmittel umfasst, um eine Cloud-Gateway-Vorrichtung (20) nach einem der Ansprüche 1 und 2 zu veranlassen, ein Verfahren nach einem der Ansprüche 3 bis 5 auszuführen.

8. Cloud-Computing-Umgebung, die Folgendes umfasst:
eine Cloud-Plattform (18) zum Bereitstellen eines oder mehrerer Cloud-Dienste (16);
eine Cloud-Gateway-Vorrichtung (20) nach einem der Ansprüche 1 bis 2; und
eine oder mehrere IIoT-Vorrichtungen (12) in einer Industrieanlage,
wobei die Cloud-Gateway-Vorrichtung (20) kommunikationstechnisch mit der Cloud-Plattform (18) verbunden ist und
wobei die eine oder die mehreren IIoT-Vorrichtungen (12) kommunikationstechnisch mit der Cloud-Gateway-Vorrichtung (20) verbunden sind.

## Revendications

1. Dispositif de passerelle nuagique (20)
a) adapté pour être connecté de manière communicative à un ou plusieurs dispositifs IIoT (12) pour au moins acquérir à partir de ceux-ci des données industrielles et
b) adapté pour être connecté de manière communicative à une plate-forme nuagique (18) pour envoyer les données industrielles collectées à la plate-forme nuagique (18),
le dispositif de passerelle nuagique (20) comprenant :
cl) un moyen de traitement (28),
c2) une mémoire (26) couplée au moyen de traitement (28), c3) un module de transparence (50) et
c4) une unité d'affichage intégrée (24),
c5) dans lequel ledit module de transparence (50) est stocké dans ladite mémoire (26) sous la forme d'instructions lisibles par machine et est exécutable par ledit moyen de traitement (28),
c6) dans lequel ledit module de transparence (50) est adapté pour calculer des informations de transparence relatives aux données industrielles acquises à partir des dispositifs IIoT (12) et/ou du dispositif de passerelle nuagique (20),
c7) dans lequel le module de transparence (50) est adapté pour calculer des informations de transparence, en s'interfaçant en interne avec un module d'analyse intégrée (42) et un module d'acquisition de données (40) ledit module d'analyse intégrée (42) étant fourni pour un prétraitement desdites données industrielles collectées par le module d'acquisition de données (40), en fonction d'au moins une des données suivantes :
- des données de trafic entrant depuis un dispositif IIoT (12) vers le dispositif de passerelle nuagique (20),
- des données de trafic sortant depuis le dispositif de passerelle nuagique (20) vers un dispositif IIoT (12) et/ou
- des données de configuration résidant sur les dispositifs IIoT (12), et
c8) dans lequel ladite unité d'affichage intégrée (24) est adaptée pour afficher les informations de transparence calculées relatives aux données industrielles acquises ;
d0) comportant une interface (52) fournie pour transférer lesdites informations de transparence calculées relatives auxdites données industrielles vers un dispositif ou système externe (22) ; dans lequel
dl) le module de transparence (50) est adapté pour obtenir un flux parallèle de toutes les données collectées par le dispositif de passerelle nuagique (20) et de toutes les données transférées vers la plate-forme nuagique (18) par le dispositif de passerelle nuagique (20) à la réception de commandes d'acquisition de données respectives provenant du dispositif ou système externe (22) ; dans lequel
d2) le module de transparence (50) est adapté pour inspecter tous les signaux de commande utilisés par le dispositif de passerelle nuagique (20) et inspecter toutes les opérations d'écriture du dispositif de passerelle nuagique (20) sur les dispositifs IIoT (12) avant qu'elles ne soient effectuées par le dispositif de passerelle nuagique (20) à la réception d'une commande d'acquisition de données respective provenant du dispositif ou système externe (22) ; dans lequel
d3) les données identifiées dans une commande d'acquisition de données ou une pluralité de commandes d'acquisition de données et mises à disposition par le biais du module de transparence (50) sont affichées au moyen de l'unité d'affichage intégrée (24).

2. Dispositif de passerelle nuagique (20) selon la revendication 1,
dans lequel le module de transparence (50) permet à l'utilisateur de brancher des modules d'anonymisation personnalisés, de telle sorte que les données collectées et/ou traitées par le dispositif de passerelle nuagique (20) soient anonymisées conformément aux exigences de l'utilisateur et aux politiques informatiques, dans lequel un module pertinent est installé sur le dispositif de passerelle nuagique (20) et intégré dans la pile logicielle de la passerelle nuagique (20) à la réception d'une commande de déploiement respective.

3. Procédé d'exploitation d'un dispositif de passerelle nuagique (20) selon l'une quelconque des revendications 1 et 2 précédentes, ledit procédé comprenant les étapes suivantes :
l'acquisition, par le dispositif de passerelle nuagique (20), desdites données industrielles à partir des dispositifs IIoT (12) et/ou du dispositif de passerelle nuagique (20) ;
le calcul, par le module de transparence (50), desdites informations de transparence relatives aux données industrielles ;
l'affichage des informations de transparence calculées relatives aux données industrielles sur une unité d'affichage intégrée (24) ;
le transfert, par l'interface (52), desdites informations de transparence calculées relatives auxdites données industrielles vers un dispositif ou système externe (22) ;
l'obtention, par le module de transparence (50) , d'un flux parallèle de toutes les données collectées par le dispositif de passerelle nuagique (20) et de toutes les données transférées vers la plate-forme nuagique (18) par le dispositif de passerelle nuagique (20) à la réception de commandes d'acquisition de données respectives provenant du dispositif ou système externe (22) ;
l'inspection, par le module de transparence (50), de tous les signaux de commande utilisés par le dispositif de passerelle nuagique (20) et l'inspection de toutes les opérations d'écriture du dispositif de passerelle nuagique (20) sur les dispositifs IIoT (12) avant qu'elles ne soient effectuées par le dispositif de passerelle nuagique (20) à la réception d'une commande d'acquisition de données respective provenant du dispositif ou système externe (22) ; et
l'affichage de données identifiées dans une commande d'acquisition de données ou une pluralité de commandes d'acquisition de données et étant mises à disposition par le biais du module de transparence (50), au moyen de l'unité d'affichage intégrée (24).

4. Procédé selon la revendication 3, le procédé comprenant en outre l'étape suivante
l'activation d'un module d'acquisition de données (40) résidant dans ladite mémoire (26) en vue de son exécution par ledit moyen de traitement (28),
dans lequel ledit module d'acquisition de données (40) est adapté pour acquérir lesdites données industrielles à partir des dispositifs IIoT (12) et/ou du dispositif de passerelle nuagique (20) .

5. Procédé selon la revendication 3 ou 4, le procédé comprenant en outre l'étape suivante
le transfert desdites informations calculées relatives auxdites données industrielles vers le dispositif ou système externe (22) au moyen d'une interface (52) comprise par le dispositif de passerelle nuagique (20).

6. Produit de programme d'ordinateur directement chargeable dans la mémoire interne d'un dispositif de passerelle nuagique (20) selon l'une quelconque des revendications 1 à 2, comprenant des parties de code logiciel pour réaliser les étapes selon l'une quelconque des revendications 3 à 5, lorsque ledit produit est exécuté sur le dispositif de passerelle nuagique (20).

7. Produit de programme d'ordinateur stocké sur un support utilisable par ordinateur, comprenant un moyen de programme lisible par ordinateur pour amener un dispositif de passerelle nuagique (20) selon l'une quelconque des revendications 1 et 2 à réaliser un procédé selon l'une quelconque des revendications 3 à 5.

8. Environnement infonuagique comprenant :
une plate-forme nuagique (18) destinée à fournir un ou plusieurs services nuagiques (16) ;
un dispositif de passerelle nuagique (20) selon l'une quelconque des revendications 1 à 2 ; et
un ou plusieurs dispositifs IIoT (12) dans une installation industrielle,
dans lequel ledit dispositif de passerelle nuagique (20) est connecté de manière communicative à ladite plate-forme nuagique (18) et
dans lequel les un ou plusieurs dispositifs IIoT (12) sont connectés de manière communicative audit dispositif de passerelle nuagique (20).
